# EUROPÄISCHE PATENTSCHRIFT

(11) **EP 3 303 889 B1**
(45) Veröffentlichungstag und Bekanntmachung des Hinweises auf die Patenterteilung: **04.03.2020**
(21) Anmeldenummer: 16726032.2
(22) Anmeldetag: 17.05.2016
(51) Int. Cl.: F16K 7/00, F16K 37/00

(54) **VERFAHREN ZUM ERMITTELN EINER ZUSTANDSGRÖSSE EINER VENTILMEMBRAN EINES ELEKTRONISCH GESTEUERTEN UND MOTORISCH ANGETRIEBENEN MEMBRANVENTILS, SOWIE MEMBRANVENTILSYSTEM**
METHOD FOR DETERMINING A STATE VARIABLE OF A VALVE DIAPHRAGM OF AN ELECTRONICALLY CONTROLLED AND MOTOR-DRIVEN DIAPHRAGM VALVE, AND DIAPHRAGM VALVE SYSTEM
PROCÉDÉ DE DÉTERMINATION D'UNE GRANDEUR D'ÉTAT D'UNE MEMBRANE DE SOUPAPE D'UNE SOUPAPE À MEMBRANE À COMMANDE ÉLECTRONIQUE ET ENTRAÎNEMENT PAR MOTEUR, AINSI QUE SYSTÈME DE SOUPAPE À MEMBRANE

(30) Priorität: 02.06.2015 DE 102015210208
(43) Veröffentlichungstag der Anmeldung: 11.04.2018
(73) Patentinhaber: GEMÜ Gebr. Müller Apparatebau GmbH & Co. Kommanditgesellschaft, 74653 Ingelfingen (DE)
(72) Erfinder: MUELLER, Gert, 74653 Kuenzelsau (DE); BRIEN, Joachim, 89558 Boehmenkirch (DE); FLOEGEL, Werner, 74677 Doerzbach (DE)
(74) Vertreter: DREISS Patentanwälte PartG mbB
(86) Internationale Anmeldenummer: PCT/EP2016/060968
(87) Internationale Veröffentlichungsnummer: WO 2016/192967

(56) Entgegenhaltungen:
- DE-A1-102013 214 304
- US-A1- 2005 092 079
- US-A1- 2008 202 606
- US-A1- 2013 319 551

## Beschreibung

Die Erfindung betrifft ein Verfahren zum Ermitteln einer Zustandsgröße einer Ventilmembran eines elektronisch gesteuerten motorisch, insbesondere elektrisch oder pneumatisch angetriebenen Membranventils nach dem Oberbegriff des Anspruchs 1, sowie ein Membranventilsystem nach dem Oberbegriff des nebengeordneten Patentanspruchs.

Membranventile sind hinreichend bekannt und dienen dazu, die Menge eines Fluids in einem Fluidstrom zu steuern. Bei einem bekannten Membranventil dieser Art (DE 10 2012 222 062 A1) wird eine Ventilmembran von einem Ventilantrieb motorisch, nämlich pneumatisch betätigt. In geschlossenem Zustand des Membranventils drückt der Ventilantrieb die Ventilmembran auf einen Dichtsteg eines Ventilkörpers. Bekannt ist ferner, ein solches Ventilmembran regelmäßig zu warten und bei einer solchen Wartung eine Zustandsgröße der Ventilmembran, nämlich deren aktuelle Dicke, von Hand zu messen.

Die US 2008/0202606 A1 offenbart ein Membranventil, bei dem an einer Ventilmembran ein Sensor vorhanden ist, mit dem ein Spannungswert erfasst wird. Aus einer Veränderung des Spannungswerts wird auf einen Verschleiß geschlossen. Die US 2013/0319551 A1 beschreibt ein Membranventil. Aus einer eine Ventilmembran beschreibenden Größe wird ein Verschleiß der Ventilmembran ermittelt. Die US 20050092079 A1 betrifft ebenfalls ein Verfahren zur Überwachung einer Ventilmembran, bei der mittels eines Sensors die Position und Bewegung der Ventilmembran erfasst wird.

Hiervon ausgehend hat die vorliegende Erfindung die Aufgabe, ein Verfahren der eingangs genannten Art bereitzustellen, mit dem eine Zustandsgröße der Ventilmembran eines elektronisch gesteuerten und motorisch, insbesondere elektrisch oder pneumatisch angetriebenen Membranventils einfach und zuverlässig ermittelt werden kann.

Diese Aufgabe wird durch ein Verfahren mit den Merkmalen des Anspruchs 1 gelöst, sowie durch ein Membranventilsystem mit den Merkmalen des nebengeordneten Patentanspruchs. Vorteilhafte Weiterbildungen der Erfindung sind in Unteransprüchen angegeben. Ferner finden sich für die Erfindung wichtige Merkmale in der nachfolgenden Beschreibung und in der beiliegenden Zeichnung. Die Merkmale können dabei für die Erfindung sowohl in Alleinstellung als auch in unterschiedlichen Kombinationen wichtig sein, ohne dass hierauf nochmals explizit hingewiesen wird.

Erfindungsgemäß wird während eines ersten Zeitbereichs ein Referenz- bzw. Initialzustand der Ventilmembran erfasst, indem ein Referenz- bzw. Initialwert einer mit dem Bewegungsvorgang der Ventilmembran zusammenhängenden Größe bei einer Bewegung der Ventilmembran erfasst wird, wobei das Membranventil durch die Bewegung von einem ersten Zustand in einen zweiten Zustand gebracht wird. Während eines nachfolgenden Zeitbereichs wird dann - geplant oder zufällig - die Ventilmembran wieder so bewegt, dass das Membranventil in den zweiten Zustand gebracht wird, und bei dieser Bewegung wird dann wiederum der Wert, hier als "Betriebswert" bezeichnet, der mit dem Bewegungsvorgang der Ventilmembran zusammenhängenden Größe erfasst.

Man hat nun mindestens zwei Werte, nämlich einen Referenzwert aus einem Referenzzustand und einen Betriebswert aus einem zeitlich nach dem Referenzzustand liegenden Betriebszustand. Diese können nun miteinander verglichen werden, und aus dem Vergleich kann dann die aktuelle Zustandsgröße ermittelt werden. Dabei kann die aktuelle Zustandsgröße entweder ein absoluter Wert sein, was voraussetzt, dass ein absoluter Referenzwert aus dem Referenzzustand bekannt ist, oder die aktuelle Zustandsgröße ist ein relativer Wert beispielsweise im Sinne einer prozentualen oder absoluten Veränderung.

Das erfindungsgemäße Verfahren kann vollautomatisch entweder auf Anforderung oder zufällig dann, wenn im Betrieb des Membranventils erkannt wird, dass das Membranventil in den zweiten Zustand gebracht wird oder gebracht wurde, ausgeführt werden. Dies gestattet das Ermitteln der Zustandsgröße der Ventilmembran nicht nur bei einer Wartung, bei der das Membranventil auseinander gebaut wird, sondern viel öfter und auch im ganz normalen Betrieb des Membranventils, wodurch die Zuverlässigkeit des Betriebs des Membranventils deutlich erhöht wird. Auch kann ein kritischer Zustand der Ventilmembran zuverlässig und auch außerhalb regelmäßiger Wartungen erkannt werden.

Indem die während des zweiten Zeitbereichs erfassten Werte nur abgespeichert werden, wenn diese von zuvor erfassten Werten um mehr als einen Grenzwert abweichen, wird die Menge der Daten, die abgespeichert wird, erheblich reduziert, wodurch Speicherplatz eingespart wird.

Eine erste Weiterbildung des erfindungsgemäßen Verfahrens zeichnet sich dadurch aus, dass der erste Zeitbereich unmittelbar nach einer Inbetriebnahme oder einer Wartung und der zweite Zeitbereich danach während eines laufenden Betriebs des Membranventils liegen. Unmittelbar nach einer Inbetriebnahme oder nach einer Wartung ist die Zustandsgröße der Ventilmembran ohnehin bekannt, so dass man durch das erfindungsgemäße Verfahren eine Veränderung der Zustandsgröße relativ zu einem sicher bekannten Ausgangszustand erfassen kann. Die durch das erfindungsgemäße Verfahren gelieferte Information ist daher besonders aussagekräftig.

Ferner wird vorgeschlagen, dass die Zustandsgröße eine Membrandicke ist. Dies ist eine für den Zustand der Ventilmembran besonders aussagefähige Zustandsgröße.

Möglich ist auch, dass das Membranventil in dem ersten Zustand geöffnet, vorzugsweise maximal geöffnet ist. Dies ist ein definierter und daher besonders gut erfassbarer Zustand des Membranventils.

Ferner ist möglich, dass das Membranventil in dem zweiten Zustand geschlossen ist. Auch dies ist ein definierter und daher besonders gut erfassbarer Zustand des Membranventils, bei dessen Anwendung die Genauigkeit des erfindungsgemäßen Verfahrens besonders hoch ist.

Eine im Hinblick auf die Datenerfassung besonders einfach realisierbare Ausgestaltung des erfindungsgemäßen Verfahrens zeichnet sich dadurch aus, dass zur Ermittlung der mit dem Bewegungsvorgang der Ventilmembran zusammenhängenden Größe eine Mehrzahl mindestens von Wertepaaren aus Position eines Antriebselements eines Ventilantriebs und Zeitpunkt erfasst wird.

Die mit dem Bewegungsvorgang der Ventilmembran zusammenhängende Größe kann eine aus der folgenden Gruppe sein: Durchschnittsgeschwindigkeit des Ventilantriebs; Endgeschwindigkeit des Ventilantriebs;
Geschwindigkeitsverlauf des Ventilantriebs; Zeit für die Bewegung des Ventilantriebs vom ersten Zustand des Membranventils in den zweiten Zustand; eine Regelabweichung des Ventilantriebs; ein Regelparameter des Ventilantriebs; bei einer Kraftregelung: eine Position eines Ventilantriebs bei Erreichen eines Soll-Kraftwerts; bei einer Wegregelung: eine Kraft des Ventilantriebs bei Erreichen eines Soll-Positionswerts.

Die Genauigkeit des erfindungsgemäßen Verfahrens wird erhöht, wenn bei der Ermittlung der Zustandsgröße ein temperaturbedingter und/oder druckbedingter Einfluss auf die mit dem Bewegungsvorgang der Ventilmembran zusammenhängende Größe berücksichtigt wird.

Indem die ermittelte Zustandsgröße mit einem Grenzwert verglichen und abhängig vom Ergebnis des Vergleichs eine Aktion ausgelöst wird, wird die Betriebszuverlässigkeit des Membranventils nochmals erhöht, da eine "manuelle" Überprüfung der ermittelten Zustandsgröße nicht mehr notwendig ist. Dies gilt auch dann, wenn es während einer Mehrzahl von zweiten Zeitverläufen durchgeführt und ein Verlauf der ermittelten Zustandsgröße ermittelt wird, und wenn abhängig vom ermittelten Verlauf eine Aktion ausgelöst wird. Dabei kann durch eine Überprüfung bzw. Auswertung des Verlaufs der Zustandsgröße besonders zuverlässig ein kritischer Zustand der Ventilmembran vorhergesagt werden. Vorgeschlagen wird auch, dass die Aktion auch von einer die Ventilmembran charakterisierenden Größe, insbesondere einem Werkstoff der Ventilmembran, abhängt. Hierdurch wird die Aussagekraft des Ermittlungsergebnisses des erfindungsgemäßen Verfahrens nochmals verbessert.

Wenn bei einem Membranventilsystem die Ermittlungseinrichtung und/oder eine Speichereinrichtung für die erfassten Werte von dem Membranventil entfernt angeordnet sind/ist, wird Bauraum beim Membranventil gespart, und das Membranventil selbst kann vergleichsweise preiswert sein. Beispielsweise kann das Membranventil beim Betreiber, die Ermittlungseinrichtung und die Speichereinrichtung dagegen beispielsweise beim Hersteller des Membranventils vorhanden sein. Hierdurch wird der Aufwand beim Betreiber des Membranventils reduziert.

Wenn dagegen bei einem Membranventilsystem die Ermittlungseinrichtung und/oder eine Speichereinrichtung für die erfassten Werte in das Membranventil integriert sind/ist, hat dies den Vorteil, dass eine integrierte und sich selbst überwachende Einheit geschaffen wird. Eine besondere Infrastruktur für die Überwachung des Membranventils ist nicht erforderlich. Denkbar ist auch, dass eher statische Daten beim Membranventil gespeichert werden, wohingegen eher dynamische Daten bei einer entfernt angeordneten Speichereinrichtung gespeichert werden.

Nachfolgend wird eine mögliche Ausführungsform der Erfindung unter Bezugnahme auf die nachfolgende Zeichnung beispielhaft erläutert. In der Zeichnung zeigen:
Figur 1 einen schematischen Schnitt durch ein Membranventil in neuem und geöffnetem Zustand;
Figur 2 das Membranventil von Figur 1 in geschlossenem Zustand;
Figur 3 eine Darstellung ähnlich Figur 2, wobei das Membranventil eine aufgequollene Ventilmembran aufweist;
Figur 4 eine Darstellung ähnlich Figur 2, wobei das Membranventil eine geschrumpfte Ventilmembran aufweist;
Figur 5 eine schematische Darstellung eines Membranventilsystems; und
Figur 6 ein Flussdiagramm eines Verfahrens zur Ermittlung einer Zustandsgröße der Ventilmembran des Membranventils der Figuren 1 bis 4.

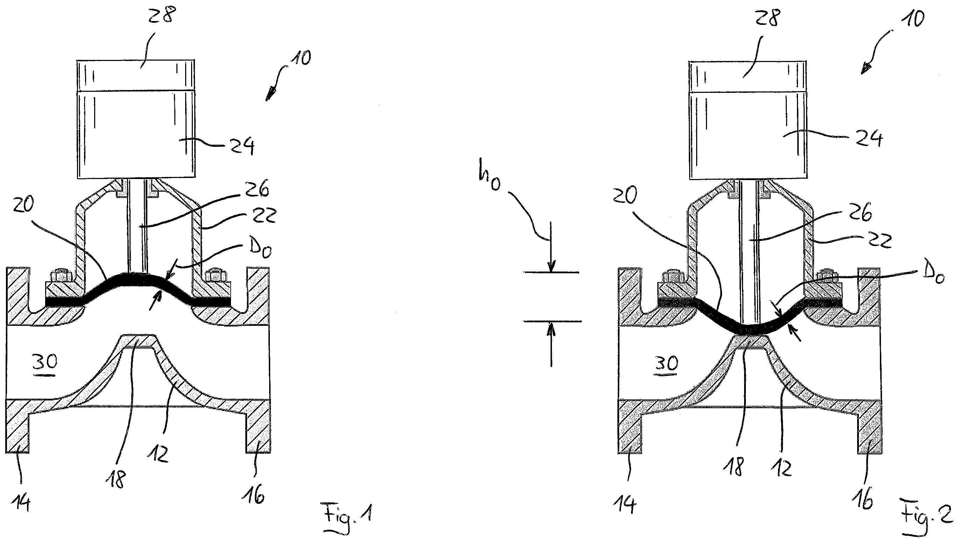

In Figur 1 trägt ein Membranventil insgesamt das Bezugszeichen 10. Es umfasst einen Ventilkörper 12 mit einem Einlassstutzen 14 und einem Auslassstutzen 16. Zwischen diesen ist ein stegförmiger Ventilsitz 18 ausgebildet. Zu dem Membranventil 10 gehört ferner eine kalottenförmige Ventilmembran 20, die zwischen dem Ventilkörper 12 und einem Zwischenstück 22 verklemmt ist. Am Zwischenstück 22 ist ein Ventilantrieb 24 befestigt, der über ein Antriebselement in Form einer Antriebsstange 26 verfügt, die mit der Ventilmembran 20 gekoppelt ist. Auf diese Weise kann die Ventilmembran 20 motorisch bewegt werden. Bei dem Ventilantrieb 24 kann es sich beispielsweise um einen pneumatischen Ventilantrieb handeln, ebenso ist aber auch ein elektromotorischer Ventilantrieb möglich. Zur Steuerung des Ventilantriebs 24 dient eine elektronische Steuereinrichtung 28, die unmittelbar am Ventilantrieb 24 angeordnet und insoweit in das Membranventil 10 integriert ist.

In Figur 1 ist die Ventilmembran 20 in einem Neuzustand gezeigt, in dem sie eine gleichmäßige und normale Dicke D₀ aufweist. Ferner ist die das Membranventil 10 in Figur 1 in einem ersten Zustand gezeigt, in dem es maximal geöffnet ist. Ein Strömungsweg in einem Strömungskanal 30 vom Einlassstutzen 14 zum Auslassstutzen 16 ist somit offen.

In Figur 2 ist das Membranventil 10 in einem zweiten Zustand gezeigt, in dem es geschlossen ist, indem die Ventilmembran 20 mittels des Ventilantriebs 24 und der Antriebsstange 26 gegen den Ventilsitz 18 bewegt wurde. In diesem zweiten Zustand ist der Strömungskanal 30 vom Einlassstutzen 14 zum Auslassstutzen 16 somit gesperrt. Der Weg, den die Antriebsstange 26 von dem in Figur 1 gezeigten ersten Zustand bis zu dem in Figur 2 gezeigten zweiten Zustand zurücklegen muss, beträgt vorliegend h₀.

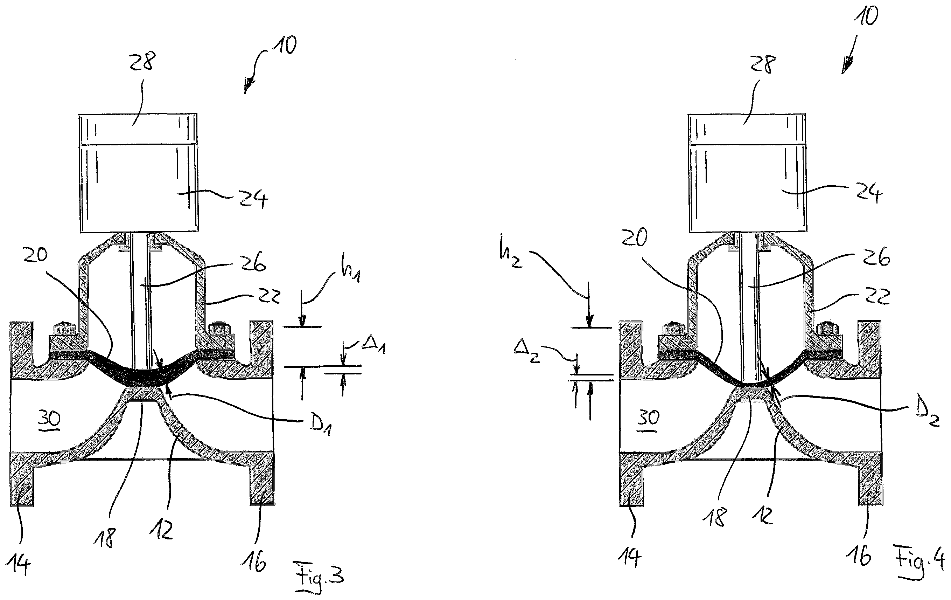

In Figur 3 ist das Membranventil 10 wiederum in dem zweiten geschlossenen Zustand gezeigt. Allerdings ist die Ventilmembran 20 nicht im Neuzustand gezeigt, sondern nach einer gewissen Betriebszeit. Während dieser ist sie durch den Betrieb des Membranventils 10 aufgequollen. Sie weist nun eine erhöhte Dicke D₁ auf. Um das Membranventil 10 vom ersten geöffneten Zustand (Figur 1) in den zweiten geschlossenen Zustand zu bringen, muss der Ventilantrieb 24 bzw. die Antriebsstange 26 einen Weg h₁ zurücklegen, wobei der Weg h₁ um einen Differenzwert Δ₁ kleiner ist als der Weg h₀ von Figur 2.

In Figur 4 ist das Membranventil 10 nochmals in dem zweiten geschlossenen Zustand gezeigt. Wiederum ist die Ventilmembran 20 nicht im Neuzustand, sondern nach einer gewissen Betriebszeit, in der sie beispielsweise durch Walkarbeit oder Abrasion im Betrieb des Membranventils 10 dünner geworden ist. Sie weist nun eine verringerte Dicke D₂ auf. Um das Membranventil 10 vom ersten geöffneten Zustand (Figur 1) in den zweiten geschlossenen Zustand zu bringen, muss der Ventilantrieb 24 bzw. die Antriebsstange 26 einen Weg h₂ zurücklegen, wobei der Weg h₂ um einen Differenzwert Δ₂ größer ist als der Weg h₀ von Figur 2.

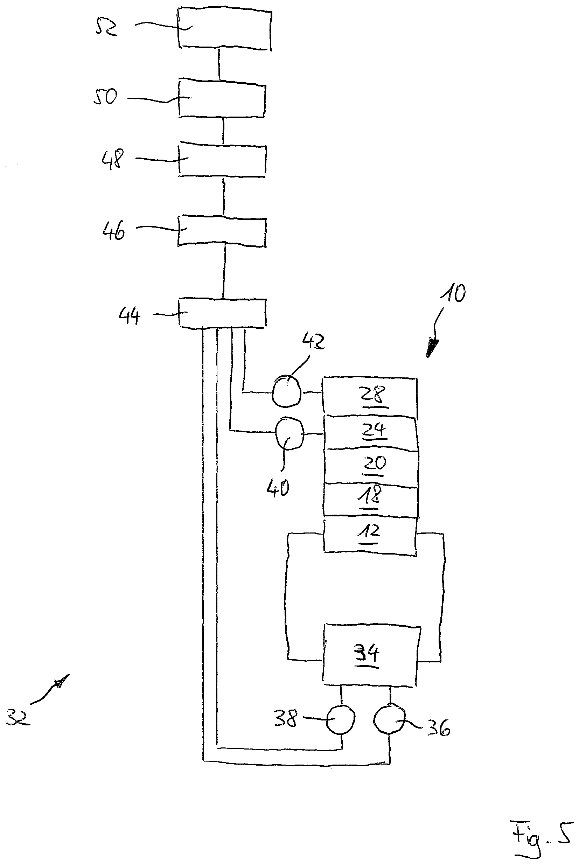

Wie weiter unten noch im Detail erläutert werden wird, wird dieser Sachverhalt ausgenutzt, um im laufenden Betrieb des Membranventils 10 eine Zustandsgröße in Form der Dicke D der Ventilmembran 20 zu ermitteln. Hierzu wird das in Figur 5 schematisch dargestellte Membranventilsystem 32 verwendet:
Dieses umfasst das in den Figuren 1 bis 4 gezeigte Membranventil 10, welches in eine verfahrenstechnische Anlage 34 eingebaut ist, die vorliegend lediglich durch eine Box schematisiert ist. Die verfahrenstechnische Anlage 34 weist unter anderem zwei Sensoren 36 und 38 auf, welche eine Temperatur und einen Druck P des durch das Membranventil 10 strömenden Fluids erfassen. Der Ventilantrieb 24 ist mit einem Positionssensor 40 verbunden, welcher die aktuelle Position der Antriebsstange 26 erfasst. Dabei muss es sich bei dem Positionssensor 40 nicht zwingend um einen separaten Sensor handeln, sondern dieser kann als Funktion in die Steuersoftware des Ventilantriebs 24 integriert sein. Auch ein Zeitstempel wird von der elektronischen Steuereinrichtung 28 bereitgestellt, was durch das Bezugszeichen 42 angedeutet ist. Ein solcher Zeitstempel ist aber nicht zwingend notwendig.

Der Temperatursensor 36, der Drucksensor 38, der Positionssensor 40 und die Zeitstempelbereitstellung 42 sind mit einer Schnittstelle 44 verbunden, die mit einer von dieser entfernt angeordneten Schnittstelle 46 kommuniziert. Der Begriff "entfernt" bedeutet, dass diese Schnittstelle 46 nicht unmittelbar beim Membranventils 10 angeordnet ist, sondern an einer anderen Stelle beim Betreiber der verfahrenstechnischen Anlage 34, oder sogar überhaupt nicht bei dem Betreiber, sondern an einem ganz anderen Ort, beispielsweise beim Hersteller des Membranventils 10 oder einem sonstigen Dienstleister.

Die Schnittstelle 46 ist mit einem Speicher 48 (sog. "IOT-Cloud") verbunden, der über einen Filter 50 zu einer Ermittlungseinrichtung 52 führt. Der Speicher 48, der Filter 50 und die Ermittlungseinrichtung 52 sind also ebenfalls entfernt vom Membranventil 10 angeordnet. Bei einer nicht dargestellten Ausführungsform sind die Elemente 44 bis 52 oder zumindest einige von diesen nicht entfernt vom Membranventil 10 angeordnet, sondern in dieses integriert, beispielsweise indem sie in der elektronischen Steuereinrichtung 28 angeordnet sind.

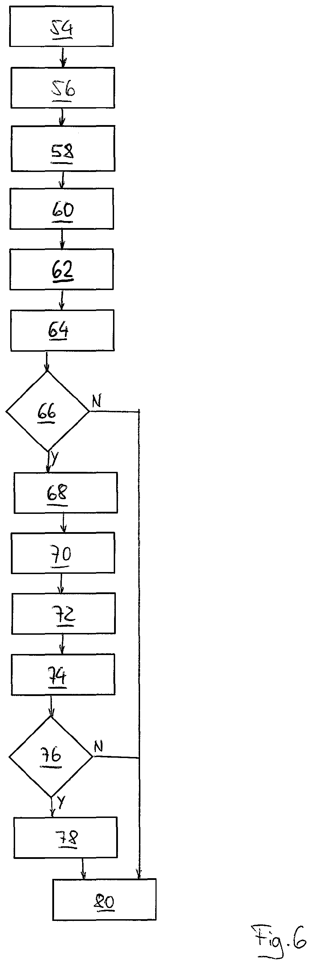

Nun wird unter Bezugnahme auf Figur 6 ein Verfahren zum Ermitteln einer Zustandsgröße in Form der Dicke D bzw. einer Veränderung Δ der Dicke D der der Ventilmembran 20 erläutert. Das Verfahren ist zumindest zum Teil als Computerprogramm auf einem Speicher der Ermittlungseinrichtung 52 gespeichert.

Nach einem Startblock 54 wird in einem Block 56 ein Initialisierungszyklus für das Membranventil 10 begonnen. Dieser Initialisierungszyklus 56 findet in einem "ersten Zeitbereich" des Lebens des Membranventils 10 statt, nämlich unmittelbar nach dessen Installation in der verfahrenstechnischen Anlage 34, bei noch vollkommen neuer und ungenutzter Ventilmembran 20. Alternativ kann dieser Initialisierungszyklus 56 auch nach einer Wartung des Membranventils 10 durchgeführt werden, bei der die Ventilmembran 20 ausgetauscht wurde, sich die eingebaute Ventilmembran 20 also im Neuzustand befindet.

Bei diesem Initialisierungszyklus 56 wird der Ventilantrieb 24 so angesteuert, dass das Membranventil 10 in seinem ersten geöffneten Zustand (Figur 1) ist. Dann wird der Ventilantrieb 24 angesteuert, so dass das Membranventil 10 aus dem ersten geöffneten Zustand in den zweiten geschlossenen Zustand (Figur 2) übergeht. Während des Initialisierungszyklus 56 werden mittels des Temperatursensors 36, des Drucksensors 38, des Positionssensors 40 und der Zeitstempelbereitstellung 42 entsprechende Werte erfasst (Block 58) und über die Schnittstellen 44 und 46 dem Speicher 48 zugeführt und dort abgespeichert (Block 60). Bei den abgespeicherten Werten handelt es sich also um Werte-Quadrupel.

Der zweite geschlossene Zustand des Membranventils 10 wird bei dem hier konkret beschriebenen Ausführungsbeispiel durch eine Kraftregelung erkannt. Hierzu wird in dem Ventilantrieb 24 die auf die Antriebsstange 26 wirkende Druckkraft in Form eines Ist-Kraftwerts zumindest mittelbar, beispielsweise über die zur Betätigung erforderliche Stromaufnahme, erfasst. Erreicht dieser Ist-Kraftwert einen Grenzwert (Soll-Kraftwert), wird davon ausgegangen, dass die Ventilmembran 20 ausreichend stark gegen den Ventilsitz 18 gedrückt wird, sich das Membranventil 10 also im geschlossenen zweiten Zustand befindet. Der Ventilantrieb 44 wird dann von der elektronischen Steuereinrichtung 28 angehalten.

Die entsprechende erreichte und über den Positionssensor 40 übermittelte Position der Antriebsstange 26 ergibt den Hub h₀ bei neuer und ungenutzter Ventilmembran 20 (Figur 2). Man kann also sagen, dass die in 58 erfasste und in 60 als sog. "Referenz- oder Initialwert" abgespeicherte Position der zum Ventilantrieb 24 gehörenden Antriebsstange 26 bei Erreichen des Soll-Kraftwerts eine mit dem Bewegungsvorgang der Ventilmembran 20 - nämlich dem Ende des Bewegungsvorgangs - zusammenhängende Größe ist.

Das Membranventil 10 bzw. das Membranventilsystem 32 werden nun ganz normal im üblichen Betrieb der verfahrenstechnischen Anlage 34 betrieben (Block 62), indem über die elektronische Steuereinrichtung 28 der Ventilantrieb 24 angesteuert wird entsprechend den Bedürfnissen der verfahrenstechnischen Anlage 34. Dabei werden die bereits oben erwähnten Werte laufend erfasst (Block 64). In einem Vergleichsblock 66 wird geprüft, ob die erfassten Werte sich von den zu einem vorhergehenden Zeitpunkt erfassten Werten unterscheiden. Lediglich wenn dies der Fall ist, werden die neu erfassten Werte bzw. Werte-Quadrupel als Rohdaten im Block 68 - dauerhaft oder temporär - im Speicher 48 gespeichert.

Dabei kommt es während zufälliger Zeitbereiche ("zweite Zeitbereiche") immer wieder einmal dazu, dass das Membranventil 10 durch Bewegen der Ventilmembran 20 in den geschlossenen zweiten Zustand übergeht. Ein Schließen des Membranventils 10 wird wiederum dadurch erkannt, dass eine erfasste Ist-Kraft eine vorgegebene Soll-Kraft erreicht, oder beispielsweise, wenn ein Ist-Positionswert einen Soll-Positionswert des geschlossenen Membranventils 10 erreicht. Immer dann, wenn ein Schließen erkannt wurde, wird der korrespondierende Positionswert als so genannter "Betriebswert" mit dem bei dem Initialisierungsvorgang im Block 56 erfassten und gespeicherten Referenzwert verglichen. Die festgestellte Differenz müsste, wenn keine sonstigen Einflüsse auf die Ventilmembran 20 eingewirkt haben, einer Veränderung Δ der Dicke der Ventilmembran 20 entsprechen.

Tatsächlich wird der oben erwähnte Betriebswert der Position der Antriebsstange 26 aber auch durch Faktoren beeinflusst, die nichts mit der Dicke D der Ventilmembran 20 zu tun haben. Beispielsweise kann ein hoher Druck im Strömungskanal 30 die Position der Antriebsstange 26 ebenso beeinflussen wie eine hohe Temperatur des im Strömungskanal 30 strömenden Fluids, welches zu einer Erwärmung insgesamt des Membranventils 10 führt. Daher werden die vom Drucksensor 38 und vom Temperatursensor 36 bereitgestellten Werte im Block 72 dazu verwendet, die in 70 ermittelte Differenz entsprechend zu korrigieren. Dies kann auch als "Filtern" bezeichnet werden, da die Einflüsse von Druck und Temperatur aus dem ermittelten Wert herausgefiltert werden, und es wird bei dem in Figur 5 gezeigten Membranventilsystem 32 im Filter 50 durchgeführt.

Der so erhaltene gefilterte Differenzwert ergibt in Block 74 die tatsächliche Veränderung Δ₁ oder Δ₂ der Dicke D der Ventilmembran 20 (siehe Figuren 3 und 4). Ist die aktuelle Dicke D₁ größer als die beim Initialisierungszyklus im Block 56 ermittelte Dicke D₀, bedeutet dies, dass die Ventilmembran 20 beispielsweise durch thermische Einflüsse um den Wert Δ₁ aufgequollen ist. Ist die aktuelle Dicke D₂ kleiner als die beim Initialisierungszyklus im Block 56 ermittelte Dicke D₀, bedeutet dies, dass die Ventilmembran 20 beispielsweise durch Abrasion und/oder Walkarbeit um den Wert Δ₂ dünner geworden ist.

Die festgestellte tatsächliche Veränderung Δ₁ oder Δ₂ wird im Block 76 mit einem Grenzwert verglichen. Ist die Veränderung Δ₁ oder Δ₂ größer als der Grenzwert, wird in 78 ein Alarm ausgelöst. Das Verfahren endet im Block 80. Die Schritte der Blöcke 70 bis 78 werden in der Ermittlungseinrichtung 52 von Figur 5 durchgeführt.

Bei der Erläuterung des Verfahrens wurde oben ein Positionswert der Antriebsstange 26 als mit dem Bewegungsvorgang der Ventilmembran 20 zusammenhängende Größe verwendet. Grundsätzlich denkbar ist aber auch die Verwendung der folgenden anderen Größen:
Durchschnittsgeschwindigkeit des Ventilantriebs;
Endgeschwindigkeit des Ventilantriebs;
Geschwindigkeitsverlauf des Ventilantriebs; Zeit für die Bewegung des Ventilantriebs vom ersten Zustand des Membranventils in den zweiten Zustand; eine Regelabweichung des Ventilantriebs; ein Regelparameter des Ventilantriebs;
bei einer Wegregelung: eine Kraft des Ventilantriebs bei Erreichen eines Soll-Positionswerts.

Beispielsweise ist bei einer aufgequollen Ventilmembran dann, wenn der Ventilantrieb beim Schließen des Membranventils versucht, die Ventilmembran in die beim Initialisieren erfasste Position zu zwingen, die Geschwindigkeit des Ventilantriebs ganz zum Schluss geringer, da die Ventilmembran vom Ventilantrieb quasi gequetscht werden muss. Bei einer dünner gewordenen Membran wird diese insgesamt eine höhere Geschwindigkeit während einer Bewegung aufweisen als beim Initialisierungszyklus, da eine dünnere Ventilmembran einen geringeren Widerstand leistet.

Die oben genannten Größen würden dann in den Schritten 58 und 64 der Figur 6 erfasst und in den Schritten 60 und 68 gespeichert werden, und aus dem Vergleich der Referenzwerte zu den Betriebswerten würde dann auf den Zustand der Ventilmembran 20 geschlossen werden. Möglich ist auch, dass eine dieser Größen für eine Plausibilisierung einer anderen dieser Größen verwendet wird.

Bei einer nicht dargestellten und erläuterten Ausführungsform wird darüber hinaus der zeitliche Verlauf der Dicke der Ventilmembran gespeichert und ausgewertet. Mittels einer solchen Auswertung kann ein Wartungsbedarf oder ein Zeitpunkt eine Schadenseintritts oder Bruchs der Ventilmembran vorhergesagt werden.

Bei einer weiteren nicht dargestellten und erläuterten Ausführungsform kann ferner bei der Auswertung der aktuellen Dicke der Ventilmembran und/oder bei der Auswertung des zeitlichen Verlaufs der Dicke der Ventilmembran auch eine die Ventilmembran charakterisierende Größe, beispielsweise ein Werkstoff der Ventilmembran, berücksichtigt werden. Der tatsächliche Werkstoff der Ventilmembran spielt insbesondere bei der Vorhersage eines möglichen Schadenseintritts oder Bruchs der Ventilmembran eine Rolle. Die Kenntnis von der die Ventilmembran charakterisierenden Größe erhält die Ermittlungseinrichtung beispielsweise durch Daten, die aus einem mit der Ventilmembran verbundenen oder in diese integrierten fernauslesbaren Speicher, beispielsweise einem RFID-Chip, ausgelesen werden.

## Patentansprüche

1. Verfahren zum Ermitteln einer Zustandsgröße (Δ) einer Ventilmembran (20) eines motorisch angetriebenen Membranventils (10), wobei es folgende Schritte umfasst:
a. In einem ersten Zeitbereich: Bewegen der Ventilmembran (20) so, dass das Membranventil (10) aus einem ersten Zustand in einen zweiten Zustand übergeht; dabei
b. Erfassen mindestens eines Referenzwerts einer mit dem Bewegungsvorgang der Ventilmembran (20) zusammenhängenden Größe;
c. In einem zweiten Zeitbereich: Bewegen der Ventilmembran (20) so, dass das Membranventil (10) aus dem ersten Zustand in den zweiten Zustand übergeht; dabei
d. Erfassen mindestens eines Betriebswerts der mit dem Bewegungsvorgang der Ventilmembran (20) zusammenhängenden Größe;
e. Vergleichen des mindestens einen Referenzwerts mit dem mindestens einen Betriebswert oder von aus diesen gewonnenen Größen;
f. Ermitteln der Zustandsgröße aus dem Ergebnis des Vergleichs; **dadurch gekennzeichnet, dass** es ferner den folgenden Schritt umfasst:
g. Abspeichern von während des zweiten Zeitbereichs erfassten Werten lediglich dann, wenn diese von zuvor erfassten Werten um mehr als einen Grenzwert abweichen.

2. Verfahren nach Anspruch 1, **dadurch gekennzeichnet, dass** der erste Zeitbereich unmittelbar nach einer Inbetriebnahme oder einer Wartung und der zweite Zeitbereich danach während eines laufenden Betriebs des Membranventils (10) ist.

3. Verfahren nach einem der vorhergehenden Ansprüche, **dadurch gekennzeichnet, dass** die Zustandsgröße eine Membrandicke (D) oder eine Veränderung (Δ) der Membrandicke (D) ist.

4. Verfahren nach einem der vorhergehenden Ansprüche, **dadurch gekennzeichnet, dass** das Membranventil (10) in dem ersten Zustand geöffnet, vorzugsweise maximal geöffnet ist.

5. Verfahren nach einem der vorhergehenden Ansprüche, **dadurch gekennzeichnet, dass** das Membranventil (10) in dem zweiten Zustand geschlossen ist.

6. Verfahren nach einem der vorhergehenden Ansprüche, **dadurch gekennzeichnet, dass** zur Ermittlung der mit dem Bewegungsvorgang der Ventilmembran (20) zusammenhängenden Größe eine Mehrzahl von Wertepaaren aus Position eines Antriebselements (26) eines Ventilantriebs (24) oder einer äquivalenten Größe und Zeitpunkt erfasst wird.

7. Verfahren nach einem der vorhergehenden Ansprüche, **dadurch gekennzeichnet, dass** die mit dem Bewegungsvorgang der Ventilmembran (20) zusammenhängende Größe eine aus der folgenden Gruppe ist: Durchschnittsgeschwindigkeit des Ventilantriebs (24); Endgeschwindigkeit des Ventilantriebs (24); Geschwindigkeitsverlauf des Ventilantriebs (24); Zeit für die Bewegung des Ventilantriebs (24) vom ersten Zustand des Membranventils (10) in den zweiten Zustand; eine Regelabweichung des Ventilantriebs (24); ein Regelparameter des Ventilantriebs (24); bei einer Kraftregelung: eine Position eines Ventilantriebs (24) bei Erreichen eines Soll-Kraftwerts; bei einer Wegregelung: eine Kraft des Ventilantriebs (20) bei Erreichen eines Soll-Positionswerts.

8. Verfahren nach einem der vorhergehenden Ansprüche, **dadurch gekennzeichnet, dass** bei der Ermittlung der Zustandsgröße (Δ) ein temperaturbedingter und/oder druckbedingter Einfluss auf die vom Bewegungsvorgang der Ventilmembran abhängige Größe berücksichtigt wird.

9. Verfahren nach einem der vorhergehenden Ansprüche, **dadurch gekennzeichnet, dass** die ermittelte Zustandsgröße (Δ) mit einem Grenzwert verglichen und abhängig vom Ergebnis des Vergleichs eine Aktion ausgelöst wird.

10. Verfahren nach einem der vorhergehenden Ansprüche, **dadurch gekennzeichnet, dass** es während einer Mehrzahl von zweiten Zeitverläufen durchgeführt und ein Verlauf der ermittelten Zustandsgröße ermittelt wird, und dass abhängig vom ermittelten Verlauf eine Aktion ausgelöst wird.

11. Verfahren nach einem der Ansprüche 9-10, **dadurch gekennzeichnet, dass** die Aktion auch von einer die Ventilmembran (20) charakterisierenden Größe, insbesondere einem Werkstoff der Ventilmembran (20), abhängt.

12. Membranventilsystem (32), umfassend einen Ventilkörper (12), eine Ventilmembran (20), einen Ventilantrieb (24), der mit der Ventilmembran (20) mittels eines Antriebselements (26) gekoppelt ist, und eine elektronischen Steuereinrichtung (28) zum Steuern des Ventilantriebs (24), **dadurch gekennzeichnet, dass** es ferner umfasst: eine Erfassungseinrichtung (40), welche Werte mindestens einer mit der Bewegung der Ventilmembran (20) zusammenhängenden Größe erfasst, und eine Ermittlungseinrichtung (52) zum Ermitteln einer Zustandsgröße (Δ) der Ventilmembran (20) aus den erfassten Werten, wobei das Membranventilsystem (32) zur Durchführung eines Verfahrens nach einem der vorhergehenden Ansprüche eingerichtet und programmiert ist.

13. Membranventilsystem (32) nach Anspruch 12, **dadurch gekennzeichnet, dass** die Ermittlungseinrichtung (52) und/oder eine Speichereinrichtung (48) für die erfassten Werte von dem Membranventil (10) entfernt angeordnet ist.

14. Membranventilsystem nach Anspruch 12, **dadurch gekennzeichnet, dass** die Ermittlungseinrichtung und/oder eine Speichereinrichtung für die erfassten Werte in das Membranventil integriert ist.

## Claims

1. Method for determining a state quantity (Δ) of a valve diaphragm (20) of a motor-driven diaphragm valve (10), **characterized in that** said method comprises the following steps:
a. in a first time range: moving the valve diaphragm (20) in such a way that the diaphragm valve (10) changes from a first state into a second state; in the process
b. detecting at least one reference value of a quantity which is associated with the movement process of the valve diaphragm (20);
c. in a second time range: moving the valve diaphragm (20) in such a way that the diaphragm valve (10) changes from the first state into the second state; in the process
d. detecting at least one operating value of the quantity which is associated with the movement process of the valve diaphragm (20);
e. comparing the at least one reference value with the at least one operating value or quantities acquired therefrom;
f. determining the state quantity from the result of the comparison; **characterized in that** it further comprises the following step:
g. Storing of the values detected during the second time period only if they deviate by more than a limit value from previously detected values.

2. Method according to claim 1, **characterized in that** the first time range is immediately after a start-up or a service, and the second time range is thereafter, during operation of the diaphragm valve (10).

3. Method according to either of the preceding claims, **characterized in that** the state quantity is a diaphragm thickness (D) or a change (Δ) in the diaphragm thickness (D) .

4. Method according to any of the preceding claims, **characterized in that** the diaphragm valve (10) is open, preferably maximally open, in the first state.

5. Method according to any of the preceding claims, **characterized in that** the diaphragm valve (10) is closed in the second state.

6. Method according to any of the preceding claims, **characterized in that**, in order to determine the quantity which is associated with the movement process of the valve diaphragm (20), a plurality of value pairs of the position of a drive element (26) of a valve drive (24) or of an equivalent quantity and time are detected.

7. Method according to any of the preceding claims, **characterized in that** the quantity which is associated with the movement process of the valve diaphragm (20) is a quantity from the following group: average speed of the valve drive (24); final speed of the valve drive (24); speed profile of the valve drive (24); time for the movement of the valve drive (24) from the first state of the diaphragm valve (10) into the second state; a control deviation of the valve drive (24); a control parameter of the valve drive (24); in the case of force control: a position of a valve drive (24) when a desired force value has been reached; in the case of position control: a force of the valve drive (20) when a desired position value has been reached.

8. Method according to any of the preceding claims, **characterized in that** a temperature-related and/or pressure-related influence on the quantity which is associated with the movement process of the valve diaphragm is taken into account when determining the state quantity (Δ).

9. Method according to any of the preceding claims, **characterized in that** the determined state quantity (Δ) is compared with a limit value and an action is triggered depending on the result of the comparison.

10. Method according to any of the preceding claims, **characterized in that** it is carried out during a plurality of second passages of time, and a profile of the determined state quantity is determined, and **in that** an action is triggered depending on the determined profile.

11. Method according to either of claims 9-10, **characterized in that** the action is also dependent on a quantity that characterizes the valve diaphragm (20), in particular a material of the valve diaphragm (20).

12. Diaphragm valve system (32), comprising a valve body (12), a valve diaphragm (20), a valve drive (24) that is coupled to the valve diaphragm (20) by means of a drive element (26), and an electronic controller (28) for controlling the valve drive (24), **characterized in that** said system further comprises: a detection device (40) which detects values of at least one quantity which is associated with the movement of the valve diaphragm (20), and a determination device (52) for determining a state quantity (Δ) of the valve diaphragm (20) from the detected values, the diaphragm valve system (32) being set up and programmed to carry out a method according to any of the preceding claims.

13. Diaphragm valve system (32) according to claim 12, **characterized in that** the determination device (52) and/or a storage device (48) for the detected values is arranged remote from the diaphragm valve (10).

14. Diaphragm valve system according to claim 12, **characterized in that** the determination device and/or a storage device for the detected values is integrated in the diaphragm valve.

## Revendications

1. Procédé pour déterminer une grandeur d'état (Δ) d'une membrane de soupape (20) d'une soupape à membrane (10) entraînée de façon motorisée, dans lequel il comprend les étapes suivantes:
a. dans une première plage de temps: le déplacement de la membrane de soupape (20), de sorte que la soupape à membrane (10) passe d'un premier état dans un deuxième état; ce faisant
b. l'acquisition d'au moins une valeur de référence d'une grandeur associée au processus de déplacement de la membrane de soupape (20);
c. dans une deuxième plage de temps : le déplacement de la membrane de soupape (20), de sorte que la soupape à membrane (10) passe du premier état dans le deuxième état; ce faisant
d. l'acquisition d'au moins une valeur de fonctionnement de la grandeur associée au processus de déplacement de la membrane de soupape (20) ;
e. la comparaison de l'au moins une valeur de référence à l'au moins une valeur de fonctionnement ou de grandeurs obtenues à partir de celles-ci;
f. la détermination de la grandeur d'état à partir du résultat de la comparaison ; **caractérisé en ce qu'**il comprend en outre l'étape suivante :
g. la mise en mémoire de valeurs acquises pendant la deuxième plage de temps uniquement lorsque celles-ci se différencient de valeurs préalablement acquises de plus d'une valeur limite.

2. Procédé selon la revendication 1, **caractérisé en ce que** la première plage de temps se situe immédiatement après une mise en service ou un entretien et la deuxième plage de temps se situe ensuite pendant un fonctionnement en cours de la soupape à membrane (10).

3. Procédé selon l'une quelconque des revendications précédentes, **caractérisé en ce que** la grandeur d'état est une épaisseur de membrane (D) ou une modification (Δ) de l'épaisseur de membrane (D).

4. Procédé selon l'une quelconque des revendications précédentes, **caractérisé en ce que** la soupape à membrane (10) est ouverte dans le premier état, de préférence ouverte au maximum.

5. Procédé selon l'une quelconque des revendications précédentes, **caractérisé en ce que** la soupape à membrane (10) est fermée dans le deuxième état.

6. Procédé selon l'une quelconque des revendications précédentes, **caractérisé en ce que**, pour déterminer la grandeur associée au processus de déplacement de la membrane de soupape (20), une pluralité de paires de valeurs est acquise à partir de la position d'un élément d'entraînement (26) d'un entraînement de soupape (24) ou d'une grandeur équivalente et d'un moment.

7. Procédé selon l'une quelconque des revendications précédentes, **caractérisé en ce que** la grandeur associée au processus de déplacement de la membrane de soupape (20) est une du groupe suivant: vitesse moyenne de l'entraînement de soupape (24); vitesse finale de l'entraînement de soupape (24); variation de vitesse de l'entraînement de soupape (24); temps pour le déplacement de l'entraînement de soupape (24) du premier état de la soupape à membrane (10) dans le deuxième état; un écart de régulation de l'entraînement de soupape (24); un paramètre de régulation de l'entraînement de soupape (24); dans le cas d'une régulation de force: une position d'un entraînement de soupape (24) lorsqu'une valeur de force théorique est atteinte; dans le cas d'une régulation de course: une force de l'entraînement de soupape (20) lorsqu'une valeur de position théorique est atteinte.

8. Procédé selon l'une quelconque des revendications précédentes, **caractérisé en ce que**, lors de la détermination de la grandeur d'état (Δ), une influence provoquée par la température et/ou provoquée par la pression sur la grandeur dépendant du processus de déplacement de la membrane de soupape est prise en compte.

9. Procédé selon l'une quelconque des revendications précédentes, **caractérisé en ce que** la grandeur d'état (Δ) déterminée est comparée à une valeur limite et une action est déclenchée en fonction du résultat de la comparaison.

10. Procédé selon l'une quelconque des revendications précédentes, **caractérisé en ce qu'**il est effectué pendant une pluralité de deuxièmes variations dans le temps et une variation de la grandeur d'état déterminée est déterminée, et qu'une action est déclenchée en fonction de la variation déterminée.

11. Procédé selon l'une quelconque des revendications 9-10, **caractérisé en ce que** l'action dépend également d'une grandeur caractérisant la membrane de soupape (20), en particulier d'un matériau de la membrane de soupape (20).

12. Système de soupape à membrane (32), comprenant un corps de soupape (12), une membrane de soupape (20), un entraînement de soupape (24), qui est accouplé à la membrane de soupape (20) au moyen d'un élément d'entraînement (26), et un dispositif de commande électronique (28) destiné à commander l'entraînement de soupape (24), **caractérisé en ce qu'**il comprend en outre : un dispositif d'acquisition (40), lequel acquiert des valeurs d'au moins une grandeur associée au déplacement de la membrane de soupape (20), et un dispositif de détermination (52) destiné à déterminer une grandeur d'état (Δ) de la membrane de soupape (20) à partir des valeurs acquises, dans lequel le système de soupape à membrane (32) est conçu et programmé pour mettre en œuvre un procédé selon l'une quelconque des revendications précédentes.

13. Système de soupape à membrane (32) selon la revendication 12, **caractérisé en ce que** le dispositif de détermination (52) et/ou un dispositif mémoire (48) pour les valeurs acquises est disposé à distance de la soupape à membrane (10) .

14. Système de soupape à membrane (32) selon la revendication 12, **caractérisé en ce que** le dispositif de détermination et/ou un dispositif mémoire pour les valeurs acquises est intégré dans la soupape à membrane.
